(19) Europäisches Patentamt

European Patent Office

Office européen des brevets

(11) Publication number: **0 412 534 B1**

## EUROPEAN PATENT SPECIFICATION

(45) Date of publication of patent specification: **02.11.94**   (51) Int. Cl.⁵: **C08L 23/10**, C08K 3/34

(21) Application number: **90115254.6**

(22) Date of filing: **08.08.90**

(54) **Propylene polymer composition.**

(30) Priority: **08.08.89 JP 203898/89**

(43) Date of publication of application:
**13.02.91 Bulletin  91/07**

(45) Publication of the grant of the patent:
**02.11.94 Bulletin  94/44**

(84) Designated Contracting States:
**DE FR GB IT**

(56) References cited:
**EP-A- 0 099 251**
**EP-A- 0 228 543**

**DATABASE WPIL, accession no. 88-088476, Derwent Publications Ltd, London, GB;& JP-A-63 039 943**

(73) Proprietor: **SHOWA DENKO KABUSHIKI KAISHA**
**13-9, Shiba Daimon 1-chome**
**Minato-ku, Tokyo (JP)**

(72) Inventor: **Takada, Tomio, c/o Showa Denko K. K.**
**3-2, Chidori-cho,**
**Kawasaki-ku**
**Kawasaki-shi, Kanagawa (JP)**
Inventor: **Tajima, Koichi, c/o Showa Denko K. K.**
**3-2, Chidori-cho,**
**Kawasaki-ku**
**Kawasaki-shi, Kanagawa (JP)**
Inventor: **Suda, Tsutomu, c/o Showa Denko K. K.**
**3-2, Chidori-cho,**
**Kawasaki-ku**
**Kawasaki-shi, Kanagawa (JP)**

(74) Representative: **Henkel, Feiler, Hänzel & Partner**
**Möhlstrasse 37**
**D-81675 München (DE)**

**Description**

FIELD OF THE INVENTION

This invention relates to a propylene polymer composition. More particularly, it relates to a propylene polymer composition which has excellent mechanical characteristics such as good rigidity and low-temperature impact resistance (e.g., at -40°C) as well as good heat resistance and is suitable for use in production of automoble bumpers having high resistance to solvents and fuels (particularly, a mixture of gasoline and an alcohol), the bumpers being produced by molding the composition into an article and applying a polyurethane coating to the surface thereof.

BACKGROUND OF THE INVENTION

Propylene polymers have excellent moldability and are excellent in mechanical characteristics, heat resistance, solvent resistance and oil resistance. Accordingly, the propylene polymers are widely produced and industrially used in various fields, for example, as automobile parts, electrical components, electronic components or ordinary utensils.

Since the propylene polymers have good properties as mentioned above, it is expected to further improve their properties by compounding therein other resins, rubbers and fillers as a second or third component. Hence, various polymer blends have been produced with an advanced polymer blend technique and been widely used in the above-mentioned fields.

Reduction in weight of automobile parts, low fuel consumption and reduction in cost have been desired in the automobile industry. Further, automobiles of dissimilar form and design are catching on. Under the circumstances, effects have been made to form automobile bumpers having large size, complicated shapes and good appearance. For the purpose, materials for the bumpers are changed from metal to propylene polymer compositions, particularly polymer blends obtained by mixing a propylene polymer (e.g., a polypropylene resin) with one or more of an ethylene-propylene rubber, a polyethylene resin and a filler. Many polymer blends have been proposed, for example, in JP-A-53-64256, JP-A-53-64257, JP-A-57-55952, JP-A-57-159841 and JP-A-58-111846. (The term "JP-A" as used means an "unexamined published Japanese patent application".)

In the gasoline industry, there is a tendency to use mixed fuels obtained by mixing gasoline with a lower alcohol such as ethanol, methanol and butanol, a so-called "gasohol" from the viewpoints of resource saving and reduction in cost (in the various countries of North and South America and Europe in particular).

However, there is a problem that a urethane coating is peeled off from coated bumpers (so-called "colored bumpers") prepared by molding the above-described polymer blend comprising a propylene polymer composition into a bumper and coating a polyurethane coating thereto, when used under such conditions that they are brought repeatedly and intermittently into contact with gasohol over a long period of time.

Influence of gasohol on adhesion between the bumper base material and the polyurethane coating becomes remarkable with increase of the alcolol content in the gasohol, to thereby cause peeling of the polyurethane coating.

While the mechanism is not clear how the polyurethane coating adhered to the bumper base is attacked by gasohol and peeled off, it is believed that the polyurethane coating is swollen by the alcohol to be mixed with gasoline, allowing the gasoline to pass through the polyurethane coating easily. On the other hand, a primer (a surface treating agent capable of bonding a bumper base usually containing chlorinated polypropylene to the polyurethane coating) present just under the polyurethane coating has relatively poor resistance to solvents such as gasoline and an amorphous ethylene-propylene copolymer rubber in the bumper have also has poor solvent resistance. As a result, the physical bonding between the primer or the ethylene-propylene copolymer rubber and the polyurethane coating is deteriorated and peeling tends to occur.

SUMMARY OF THE INVENTION

An object of the present invention is to provide a propylene polymer composition capable of providing polyurethane coated bumpers having improved solvent resistance (particularly gasohol resistance).

Another object of the present invention is to provide a propylene polymer composition capable of production of large-sized colored bumpers with good moldability while retaining various excellent characteristics (e.g., low-temperature impact resistance, rigidity, heat resistance, coating efficiency, etc.)

inherent to propylene polymers.

The above-described objects of the present invention have been achieved by providing a propylene polymer composition comprising:

(A) a propylene homopolymer and/or a propylene-ethylene random copolymer containing not more than 10% by weight of ethylene as a monomer unit, said homopolymer and copolymer containing not more than 5% by weight of xylene-soluble matter at 30°C,

(B) an ethylene-propylene random copolymer containing 30 to 75% by weight of propylene as a monomer unit, containing not more than 5% by weight of xylene-insoluble matter at 30°C, having a ratio of weight-average molecular weight to number-average molecular weight (an index of molecular weight distribution) of more than 10 but less than 100 as measured by gel permeation chromatography,

(C) an ethylene-propylene copolymer containing 15 to 40% by weight of propylene as a monomer unit and having a melt flow rate (measured in accordance with JIS-K 7210, condition 14, hereinafter referred to as "MFR") of 0.1 to 4.0 g/10 min, a melting peak temperature of not lower than 80°C as measured by differential scanning calorimeter, a crystallinity of at least 1% as measured by X-ray diffraction method, and a ratio of weight-average molecular weight to number-average molecular weight of 4 to 10 as measured by gel permeation chromatography, and

(D) talc having an average particle diameter of 0.5 to 20 $\mu$m,

wherein the amount of polymer component (B) is 5.0 to 40% by weight based on the total amount of polymer components (A) and (B); a polymer composition consisting of polymer components (A), (B) and (C) has an MFR of 2.0 to 100 g/10 min; the amount of polymer component (C) is 17 to 40% by weight based on the amount of the composition, and the amount of talc (D) is 3.0 to 15% by weight based on the amount of the composition.

DETAILED DESCRIPTION OF THE INVENTION

Now, the present invention is illustrated in more detail below.

(A) Propylene homopolymer and propylene-ethylene random copolymer

Propylene homopolymer which is used in the present invention can be obtained by homopolymerization of propylene. The propylene-ethylene random copolymer can be obtained by copolymerizing propylene with not more than 10% by weight (preferably not more than 9.0% by weight, more preferably not more than 7.0% by weight) of ethylene.

Any of the propylene homopolymer and the propylene-ethylene random copolymer contains not more than 5% by weight (preferably not more than 3% by weight) of xylene-soluble matters at 30°C. These polymers generally have an MFR of 20 to 100 g/10 min, preferably 30 to 100 g/10 min, particularly preferably 30 to 80 g/10 min. When the MFR of propylene homopolymer and propylene-ethylene random copolymer is lower than 20 g/10 min, kneadability and moldability of the composition tend to be deteriorated. While when MFR exceeds 100 g/10 min, impact resistance of the composition is lowered.

(B) Ethylene-propylene random copolymer

The ethylene-propylene random copolymer which is used in the present invention contains propylene, as a monomer unit, in an amount of 30 to 75% by weight, preferably 30 to 70% by weight, particularly preferably 35 to 70% by weight. When the propylene content is less than 30% by weight, impact resistance of the composition is poor. When the propylene content is more that 75% by weight, the resulting composition has poor rigidity.

The ethylene-propylene random copolymer contains not more than 5% by weight (preferably not more than 4.5% by weight) of xylene-insoluble matters at 30°C.

The ethylene-propylene random copolymer generally has an MFR of 0.01 to 5.0 g/10 min, preferably 0.02 to 3.0 g/10 min, particularly preferably 0.02 to 2.0 g/10 min for the same reasons as in the cases of the aforesaid propylene homopolymer and propylene-ethylene random copolymer.

Further, the ethylene-propylene random copolymer has a ratio of weight-average molecular weight ($\overline{Mw}$) to number-average molecular weight ($\overline{Mn}$) of more than 10 but less than 100. If the ratio $\overline{Mw}/\overline{Mn}$ is 10 or less, or 100 or more, there is difficulty in production of the copolymer.

Polymer components (A) and (B) may be separately prepared by homopolymerization and copolymerization. The propylene homopolymer and/or the propylene-ethylene random copolymer (polymer component (A)) are/is previously mixed with the ethylene-propylene random copolymer (polymer component (B)) and the resulting mixture may be then mixed with other components in a ratio described hereinafter to prepare the composition of the present invention. Alternatively, polymer components (A) and (B) may be prepared by block copolymerization in such a manner that the propylene homopolymer and/or the propylene-ethylene random copolymer (polymer component (A)) are/is previously prepared, and ethylene and propylene are then copolymerized in the presence of polymer component (A) and a catalyst used for formation of polymer component (A) in the same reactor as that used for the formation of polymer component (A) or in a separate reactor.

In any case, a polymer composition consisting of polymer components (A) and (B) preferably has an MFR of 5.0 to 100 g/10 min, more preferably 10 to 70 g/10 min, particularly preferably 10 to 50 g/10 min. When the MFR is lower than 5.0 g/10 min, kneadability and moldability of the composition tend to be poor. When the MFR exceeds 100 g/10 min, the mechanical characteristics of the composition, particularly impact resistance tend to be deteriorated.

The total content of ethylene as a monomer unit in polymer components (A) and (B) is generally 1.0 to 25% by weight, preferably 2.0 to 20% by weight, particularly preferably 3.0 to 20% by weight based on the weight of the whole monomers units constituting polymer components (A) and (B). When the ethylene content is lower than 1.0% by weight, there is sometimes caused a problem with regard to impact resistance of the composition, and when the ethylene content exceeds 25% by weight, there is caused a problem with regard to rigidity of the composition.

(C) Ethylene-propylene copolymer

The ethylene-propylene copolymer which is used in the present invention contains propylene, as a monomer unit, in an amount content of 15 to 40% by weight, preferably 18 to 40% by weight, particularly preferably 20 to 38% by weight. When an ethylene-propylene copolymer containing lower than 15% by weight of propylene is used, an effect of improving impact resistance of the resulting composition is poor. When the propylene content is higher than 40% by weight, rigidity of the resulting composition is insufficient and gasohol resistance is low, though the impact resistance of the composition can be improved.

The ethylene-propylene copolymer has an MFR of 0.1 to 4.0 g/10 min, preferably 0.2 to 4.0 g/10 min, particularly preferably 0.5 to 4.0 g/10 min. When an ethylene propylene copolymer having an MFR of lower than 0.1 g/10 min is used, there is difficulty in dispersing it during kneading in preparation of the composition and the resulting composition has poor processability. In addition, flow marks and weld-marks are seriously noticeable on the surfaces of molded articles and a composition having a good appearance can not be obtained, even though a uniform composition can be obtained. On the other hand, when an ethylene-propylene copolymer having an MFR of higher than 4.0 g/10 min is used, an effect of improving impact resistance and gasohol resistance of the resulting composition is insufficient.

The ethylene-propylene copolymer has a Mooney viscosity ($ML_{1+4}$, 100°C) of usually 10 to 100, preferably 10 to 70, particularly preferably 20 to 70.

The ethylene-propylene copolymer has a melting peak temperature of not lower than 80°C, preferably 80 to 125°C, particularly preferably 85 to 125°C as measured with differential scanning calorimeter (DSC). When the melting peak temperature is lower than 80°C, rigidity and tensile strength of the resulting composition are poor.

The ethylene-propylene copolymer has a crystallinity of at least 1%, preferably 2 to 30%, particularly preferably 2 to 25% as measured by X-rays. When an ethylene-propylene copolymer having a crystallinity of lower than 1% is used, rigidity and tensile strength are poor, whereas when the crystallinity exceeds 30%, impact resistance tends to be lowered.

Further, the ethylene-propylene copolymer generally has the ratio $\overline{Mw}/\overline{Mn}$ of at 4 to 10, preferably 4 to 8 as measured by gel permeation chromatography (GPC). When the ratio $\overline{Mw}/\overline{Mn}$ is lower than 4, processability of the resulting composition is poor. When the ratio $\overline{Mw}/\overline{Mn}$ is more than 10, its coating efficiency is deteriorated.

(D) Talc

Talc which is used in the present invention has an average particle diameter of 0.5 to 20 $\mu$m, preferably 0.5 to 15 $\mu$m, particularly preferably 0.5 to 10 $\mu$m. When talc having a particle diameter of smaller than 0.5 $\mu$m is used, dispersibility during kneading is poor and failure in dispersion causes. When talc having a particle diameter of larger than 20 $\mu$m is used, an effect of improving rigidity and impact resistance is insufficient and failure in the appearance of molded articles sometimes occurs.

4

(E) Proportion of composition

In the composition of the present invention, the amount of the ethylene-propylene random copolymer (polymer component (B)) is 5.0 to 40% by weight, preferably 5.0 to 35% by weight, particularly preferably 7.0 to 35% by weight based on the total amount of polymer components (A) and (B). When the amount of polymer component (B) is less than 5% by weight, impact resistance, particularly low temperature impact resistance of the resulting composition is low. When the amount is more than 40% by weight, rigidity of the composition is poor.

The amount of the ethylene-propylene copolymer (polymer component (C)) is 17 to 40% by weight, preferably 17 to 35% by weight, particularly preferably 20 to 35% by weight based on the amount of the composition of the present invention. When the amount of polymer component (C) is less than 17% by weight, an effect of improving low-temperature impact resistance is insufficient. Further, there is a problem with regard to adhesion to polyurethane coating, and gasohol resistance tends to be lowered. When the amount is more than 40% by weight, processability is lowered and failures in molding such as flow marks and vacuum voids are liable to be formed, though low-temperature impact resistance, adhesion to the coating film and gasohol resistance are improved.

The amount of talc is 3.0 to 15% by weight, preferably 4.0 to 15% by weight, most preferably 4.0 to 12% by weight based on the amount of the composition. When it is less than 3.0% by weight, rigidity of the resulting composition is insufficient. When the amount is more than 15% by weight, the bond strength of the coating film is insufficient.

(F) Composition and process for preparation thereof.

The composition of the present invention can be prepared by uniformly mixing the propylene homopolymer and/or the propylene-ethylene random copolymer, the ethylene-propylene random copolymer, the ethylene-propylene copolymer and talc in such an amount as to give the above-described proportions. If desired, additives such as stabilizer against oxygen, light or heat, flame retarder, processing improver, lubricant, antistatic agent and pigment which are conventionally used for olefin polymers may be added.

The composition can be obtained by dry-blending the above components in a mixer such as tumbling mixer, ribbon blender or Henschel mixer or by kneading them in a batch mixer such as Banbury mixer or a continuous kneader such as an extruder. The above components can be continuously kneaded in the above-described continuous mixer. If desired, these methods may be used in combination. For example, the components are dry-blended and then continuously kneaded.

(G) Molding method

The thus-obtained composition is usually pelletized and then molded into a desired article (e.g., bumper, bumper corner) by molding methods such as injection molding conventionally used in the field of thermoplastic resins.

Melt-kneading for preparing the composition and molding are carried out at a temperature higher than the melting points of the polymers, but not higher than a temperature at which the polymers are heat-decomposed. For this reason, melt-kneading and molding are generally carried out at a temperature of 180 to 280°C, preferably 200 to 260°C.

The present invention is now illustrated in greater detail with reference to the following Examples which, however, are not to be construed as limiting the invention in any way.

In the following Examples and Comparative Examples, flexural modulus was measured according to ASTM D-790, notched Izod impact strength was measured at 23°C and -40°C according to ASTM D-256 and heat distortion temperature was measured according to ASTM D-648.

The bonding strength of coating film was measured in the following manner. The composition was molded into a 2 mm thick flat sheet (130 x 130 mm), the sheet was treated twice with vapor of 1,1,1-trichloroethane for 30 seconds, coated with a primer (RB291, a product of NIPPON BEE CHEMICAL CO., LTD.) and dried. The primed surface was coated with urethane coating white (R271, a product of NIPPON BEE CHEMICAL CO., LTD.) according to the specification of NIPPON BEE CHEMICAL CO., LTD. The coated sheet was cut at intervals of 10 mm. A part of the coating was forcedly peeled off. Thereafter, 180 degree peel strength of the coating was determined at a tensile strength of 50 mm/min by using a tensile tester.

Test for gasohol resistance was carried out in the following manner. The above-described flat sheet was coated with the above primer and dried. The primed surface was coated with urethane coating metallic (R255, a product of NIPPON BEE CHEMICAL CO., LTD.) and urethane coating clear (R266, a product of NIPPON BEE CHEMICAL CO., LTD.) in a similar manner to that described above. The coated sheet was cut into strips (30 x 65mm) so as to allow the cross section of each sample to be exposed. Each sample was immersed in gasohol (gasoline: 90% by volume, ethyl alcohol: 10% by volume) at room temperature. Immersion time and the state of peeling were measured by observation. Further, the composition was molded into a test bumper of 4 mm thick x 320 mm wide x 1500 mm long by an injection molding machine (clamping pressure: 1800 ton). The bumper was cut into test pieces (150 x 150 mm). The test pieces were coated in the same way as in the test for gasohol resistance and then subjected to an immersion test in the gasohol. The results were rated in three levels A, B and C: namely, A shows that after this test, neither swelling nor peeling were observed; B shows that swelling and peeling were slightly found; and C shows that swelling and peeling were observed considerably.

Process for the preparation of propylene polymers and ethylene-propylene copolymers used in the Examples and Comparative Examples, and the physical properties and types of these polymers and talc are illustrated below.

(A) Propylene polymers.

The following polymers were used as the propylene polymers.

Propylene alone was polymerized in the presence of Ziegler-Natta catalyst in a reactor without using any solvent. Ethylene was then fed to the reactor to prepare a propylene polymer. The thus-obtained propylene polymer (hereinafter referred to as PP(A)) had a composition consisting of 75% by weight of propylene homopolymer (MFR: 60 g/10 min, wholly insoluble in xylene at 30°C) and 25% by weight of an ethylene-propylene random copolymer (MFR: 0.1 g/10 min, wholly soluble in xylene at 30°C; $\overline{M}w/\overline{M}n$: 33) containing 50 % by weight of ethylene as a monomer unit. PP(A) had an MFR of 13 g/10 min.

Propylene polymer (hereinafter referred to as PP(B)) were prepared in a similar manner to that described above, which had a composition consisting of 78% by weight of propylene homopolymer (MFR: 40 g/10 min, wholly insoluble in xylene at 30°C) and an ethylene-propylene random copolymer (MFR: 0.08 g/10 min, wholly soluble in xylene at 30°C; $\overline{M}w/\overline{M}n$: 16) containing 55% by weight of ethylene as a monomer unit. PP(B) has an MFR of 32 g/10 min.

For comparison, propylene homopolymer (MFR: 20 g/10 min, hereinafter referred to as PP(C)) was used. (B) Ethylene-propylene copolymer.

As ethylene-propylene copolymers, there were used an ethylene-propylene copolymer (melting peak temperature: 115°C, crystallinity: 4%, $\overline{M}w/\overline{M}n$: 5.0, hereinafter referred to as EP(1)) containing 38% by weight of propylene as a monomer unit and having a Mooney viscosity ($ML_{1+4}$, 100°C) of 42 and an MFR of 1.0 g/10 min; an ethylene-propylene copolymer (melting peak temperature: 105°C, crystallinity 2.0%, $\overline{M}w/\overline{M}n$: 4.8, hereinafter referred to as EP(2)) containing 37% by weight of propylene as a monomer unit and having a Mooney viscosity ($ML_{1+4}$, 100°C) of 41 and an MFR of 1.0 g/10 min; an ethylene-propylene copolymer (melting peak temperature: 110°C, crystallinity: 0.7%, $\overline{M}w/\overline{M}n$: 5.8, hereinafter referred to as EP-(3)) containing 24% by weight of propylene as a monomer unit and having a Mooney viscosity ($ML_{1+4}$, 100°C) of 12 and an MFR of 4.5 g/10 min; and an ethylene-propylene copolymer (crystallinity 0%, $\overline{M}w/\overline{M}n$: 4.1, hereinafter referred to as EP(4)) containing 27% by weight of propylene as a monomer unit and having a Mooney viscosity ($ML_{1+4}$, 100°C) of 42 and an MFR of 2.0 g/10 min.

(C) Talc

Talc having an average particle diameter of 2.0 μm was used.

EXAMPLES 1 TO 7 AND COMPARATIVE EXAMPLES 1 TO 7

The propylene polymers (hereinafter referred to as PP), the ethylene-propylene copolymer (hereinafter referred to as EP) and talc were previously dry-blended in a Henschel mixer for 5 minutes, each amount being indicated in Table 1. A pelletized composition (MFR being indicated in Table 2) was prepared from each of the resulting mixtures by using a twin-screw extruder (diameter: 30 mm) while kneading it at a resin temperature of 200°C.

The thus-obtained pellets were injection molded at a resin temperature of 210°C to prepare test pieces. Izod impact strength, flexural strength, heat distortion temperature, bond strength of coating film and gasohol resistance were measured or observed. The results are shown in Table 2.

Table 1

| Example No. or Comp. Ex. No. | Amount of PP (Parts by weight) | | | Type | Amount (Parts by weight) | Amount of talc (Parts by weight) |
|---|---|---|---|---|---|---|
| | PP(A) | PP(B) | PP(C) | | | |
| Ex. 1 | 44 | 29 | 0 | EP(1) | 20 | 7 |
| " 2 | 42 | 26 | 0 | " | 25 | " |
| " 3 | 40 | 23 | 0 | " | 30 | " |
| " 4 | 44 | 29 | 0 | EP(2) | 20 | " |
| " 5 | 40 | 23 | 0 | " | 30 | " |
| " 6 | 45 | 26 | 0 | EP(1) | 25 | 4 |
| " 7 | 38 | 22 | 0 | " | 30 | 10 |
| Comp. Ex. 1 | 47 | 31 | 0 | " | 15 | 7 |
| " 2 | 38 | 20 | 0 | " | 45 | " |
| " 3 | 40 | 23 | 0 | EP(3) | 30 | " |
| " 4 | " | " | 0 | EP(4) | " | " |
| " 5 | 47 | 28 | 0 | EP(1) | 25 | 0 |
| " 6 | 33 | 17 | 0 | " | 30 | 20 |
| " 7 | 0 | 0 | 45 | EP(4) | 45 | 10 |

Table 2

| Example or Comp. Ex. No. | MFR[1] (g/10 min) | Flexural modulus (kg/cm²) | Heat distortion temp. (°C) | Bond strength of coating film (g/cm) | Izod impact strength (kg·cm/cm)[2] +23°C | Izod impact strength (kg·cm/cm)[2] -40°C | Test for gasohol resistance 30 min after immersion | Test for gasohol resistance 45 min after immersion | Test for gasohol resistance 60 min after immersion |
|---|---|---|---|---|---|---|---|---|---|
| Ex. 1 | 12.3 | 12,500 | 115 | 950 | 45 | 5.7 | A | A | B |
| " 2 | 10.6 | 11,800 | 111 | 1080 | 55 | 6.2 | A | A | A |
| " 3 | 8.7 | 10,200 | 99 | 1350 | 70 | 7.6 | A | A | A |
| " 4 | 13.0 | 12,200 | 112 | 1010 | 50 | 5.9 | A | A | B |
| " 5 | 9.1 | 10,000 | 95 | 1430 | 80 | 7.8 | A | A | A |
| " 6 | 11.0 | 10,800 | 106 | 1300 | 60 | 6.5 | A | A | A |
| " 7 | 8.2 | 11,000 | 102 | 1350 | 70 | 6.8 | A | A | A |
| Comp. Ex. 1 | 13.7 | 13,500 | 120 | 750 | 30 | 3.9 | B | C | C |
| " 2 | 6.3 | 8,500 | 88 | 1500 | 90 | 8.8 | A | A | A |
| " 3 | 11.5 | 11,200 | 106 | 960 | 55 | 6.2 | A | B | C |
| " 4 | 8.6 | 10,200 | 100 | 1390 | 75 | 7.7 | B-C | C | C |
| " 5 | 11.3 | 8,800 | 85 | 1320 | 65 | 6.5 | A | A | A |
| " 6 | 7.0 | 13,500 | 115 | 820 | 55 | 4.5 | A | A | C |
| " 7 | 6.5 | 8,000 | 83 | 1250 | 65 | 4.5 | A | B | C |

1) g/10 min  2) notched

The propylene polymer compositions of the present invention as well as the preparation thereof and the molded articles thereof have the following advantageous effects.

(1) Impact resistance at room temperature is superior and low-temperature impact resistance (e.g., at -40 °C) is good.

(2) Moldability is superior.

8

(3) Heat resistance is high.

(4) Adhesion to the urethane coating is superior.

(5) Gasohol resistance is good.

Since the propylene polymer compositions of the present invention have the above advantageous effects, they can be widely used. For example, they can be used in the field of typically automobile exterior parts such as bumpers and bumper corners.

**Claims**

1.  A propylene polymer composition comprising

    (A) a propylene homopolymer and/or a propylene-ethylene random copolymer containing not more than 10% by weight of ethylene as a monomer unit, said homopolymer and copolymer containing not more than 5% by weight of xylene-soluble matter at 30°C,

    (B) an ethylene-propylene random copolymer containing 30 to 75% by weight of propylene as a monomer unit, containing not more than 5% by weight of xylene-insoluble matter at 30°C, having a ratio of weight-average molecular weight to number-average molecular weight of more than 10 but less than 100 as measured by gel permeation chromatography,

    (C) an ethylene-propylene copolymer containing 15 to 40% by weight of propylene as a monomer unit and having a melt flow rate of 0.1 to 4.0 g/10 min, a melting peak temperature of not lower than 80°C as measured by differential scanning calorimeter, a crystallinity of at least 1% as measured by X-ray diffraction method, and a ratio of weight-average molecular weight to number-average molecular weight of 4 to 10 as measured by gel permeation chromatography, and

    (D) talc having an average particle diameter of 0.5 to 20 $\mu$m,

    wherein the amount of polymer component (B) is 5.0 to 40% by weight based on the total amount of polymer components (A) and (B); a polymer composition consisting of polymer components (A), (B) and (C) has an MFR of 2.0 to 100 g/10 min; the amount of polymer component (C) is 17 to 40% by weight based on the amount of the composition, and the amount of talc (D) is 3.0 to 15% by weight based on the amount of the composition.

2.  A propylene polymer composition as in claim 1, wherein said polymer component (A) has a melt flow rate of 20 to 100 g/10 min.

3.  A propylene polymer composition as in claim 1, wherein said polymer component (B) has a melt flow rate of 0.01 to 5.0 g/10 min.

4.  A propylene polymer composition as in claim 1, wherein a polymer composition consisting of polymer components (A) and (B) has a melt flow rate of 5.0 to 100 g/10 min.

5.  A propylene polymer composition as in claim 1, wherein the total content of ethylene as a monomer unit in polymer components (A) and (B) is 1.0 to 25% by weight based on the weight of the whole monomer units constituting polymer components (A) and (B).

6.  A propylene polymer composition as in claim 1, wherein said polymer component (C) has a Mooney viscosity of 10 to 100.

7.  A propylene polymer composition as in claim 1, wherein said polymer component (C) has said melting peak temperature of 80 to 125°C.

8.  A propylene polymer composition as in claim 1, wherein said polymer component (C) has said crystallinity of 2 to 30%.

9.  A propylene polymer composition as in claim 1, wherein said polymer component (C) has ratio of weight-average molecular weight/number-average molecular weight of 4 to 8.

**Patentansprüche**

1.  Propylen-Polymermasse, umfassend

(A) ein Propylenhomopolymer und/oder ein willkürliches Propylen-Ethylen-Copolymer mit nicht mehr als 10 Gew.-% Ethylen als Monomereneinheit, wobei das Homopolymer und das Copolymer nicht mehr als 5 Gew.-% an bei 30°C in Xylol löslichem Material enthalten,

(B) ein willkürliches Ethylen-Propylen-Copolymer mit 30 bis 75 Gew.-% Propylen als Monomereneinheit, mit nicht mehr als 5 Gew.-% an bei 30°C in Xylol unlöslichem Material und mit einem Verhältnis Gewichtsmittelmolekulargewicht/Zahlenmittelmolekulargewicht von mehr als 10, jedoch weniger als 100, bestimmt durch Gelpermeationschromatographie,

(C) ein Ethylen-Propylen-Copolymer mit 15 bis 40 Gew.-% Propylen als Monomereneinheit und einer Schmelzflußgeschwindigkeit (MFR) von 0,1 bis 4,0 g/10 min, mit einer Schmelzpeaktemperatur von nicht weniger als 80°C, bestimmt mit Hilfe eines Differentialabtastcalorimeters, mit einer Kristallinität von mindestens 1 %, bestimmt nach der Röntgenstrahlenbeugungsmethode, und mit einem Verhältnis Gewichtsmittelmolekulargewicht/Zahlenmittelmolekulargewicht von 4 bis 10, bestimmt durch die Gelpermeationschromatographie, sowie

(D) Talk eines durchschnittlichen Teilchendurchmessers von 0,5 bis 20 $\mu$m,

wobei die Menge an Polymerkomponente (B) 5,0 bis 40 Gew.-%, bezogen auf die Gesamtmenge an den Polymerkomponenten (A) und (B) beträgt, eine Polymermasse aus den Polymerkomponenten (A), (B) und (C) eine MFR von 2,0 bis 100 g/10 min besitzt, die Menge an Polymerkomponente (C) 17 bis 40 Gew.-%, bezogen auf die Menge der Masse, beträgt und die Menge an Talk (D) 3,0 bis 15 Gew.-%, bezogen auf die Menge der Masse, ausmacht.

2.  Propylen-Polymermasse nach Anspruch 1, wobei die Polymerkomponente (A) eine Schmelzflußgeschwindigkeit von 20 bis 100 g/10 min aufweist.

3.  Propylen-Polymermasse nach Anspruch 1, wobei die Polymerkomponente (B) eine Schmelzflußgeschwindigkeit von 0,01 bis 5,0 g/10 min aufweist.

4.  Propylen-Polymermasse nach Anspruch 1, wobei eine Polymermasse aus den Polymerkomponenten (A) und (B) eine Schmelzflußgeschwindigkeit von 5,0 bis 100 g/10 min aufweist.

5.  Propylen-Polymermasse nach Anspruch 1, wobei der Gesamtgehalt an Ethylen als Monomereneinheit in den Polymerkomponenten (A) und (B) 1,0 bis 25 Gew,-%, bezogen auf das Gewicht sämtlicher die Polymerkomponenten (A) und (B) bildender Monomereneinheiten, beträgt.

6.  Propylen-Polymermasse nach Anspruch 1, wobei die Polymerkomponente (C) eine Mooney-Viskosität von 10 bis 100 aufweist.

7.  Propylen-Polymermasse nach Anspruch 1, wobei die Polymerkomponente (C) eine Schmelzpeaktemperatur von 80 bis 125°C aufweist.

8.  Propylen-Polymermasse nach Anspruch 1, wobei die Polymerkomponente (C) eine Kristallinität von 2 bis 30 % aufweist.

9.  Propylen-Polymermasse nach Anspruch 1, wobei die Polymerkomponente (C) ein Verhältnis Gewichtsmittelmolekulargewicht/Zahlenmittelmolekulargewicht von 4 bis 8 aufweist.

**Revendications**

1.  Composition de polymères de propylène comprenant

(A) un homopolymère de propylène et/ou un copolymère aléatoire propylène-éthylène ne contenant pas plus de 10 % en masse d'éthylène en tant qu'unité monomérique, lesdits homopolymère et copolymère ne contenant pas plus de 5 % en masse de matière soluble dans le xylène à 30°C,

(B) un copolymère aléatoire éthylène-propylène contenant 30 à 75 % en masse de propylène en tant qu'unité monomérique, ne contenant pas plus de 5 % en masse de matière insoluble dans le xylène à 30°C, ayant un rapport de la masse moléculaire moyenne en masse à la masse moléculaire moyenne en nombre supérieur ou égal à 10 mais inférieur à 100, mesuré par chromatographie par perméation de gel,

(C) un copolymère éthylène-propylène contenant 15 à 40 % en masse de propylène en tant qu'unité monomérique et ayant une vitesse d'écoulement à l'état fondu comprise entre 0,1 et 4,0 g/10 min, une température maximale de fusion supérieure ou égale à 80°C mesurée par calorimétrie par analyse différentielle, une cristallinité d'au moins 1 % mesurée par un procédé de diffraction des rayons X, et un rapport de la masse moléculaire moyenne en masse à la masse moléculaire moyenne en nombre compris entre 4 et 10, mesuré par chromatographie par perméation de gel, et

(D) du talc, ayant un diamètre moyen de particules compris entre 0,5 et 20 µm,

dans laquelle la quantité de composant polymérique (B) est comprise entre 5,0 et 40 % en masse par rapport à la quantité totale de composants polymériques (A) et (B) ; une composition de polymères constituée des composants polymériques (A), (B) et (C) a une MFR de 2,0 à 100 g/10 min ; la quantité de composant polymérique (C) est comprise entre 17 et 40 % en masse par rapport à la quantité de composition, et la quantité de talc (D) est comprise entre 30 et 15 % en masse par rapport à la quantité de composition.

2. Composition de polymères de propylène selon la revendication 1, dans laquelle ledit composant polymérique (A) a une vitesse d'écoulement à l'état fondu comprise entre 20 et 100 g/10 min.

3. Composition de polymères de propylène selon la revendication 1, dans laquelle ledit composant polymérique (B) a une vitesse d'écoulement à l'état fondu comprise entre 0,01 et 5,0 g/10 min.

4. Composition de polymères de propylène selon la revendication 1, dans laquelle la composition de polymères constituée des composants polymériques (A) et (B) a une vitesse d'écoulement à l'état fondu comprise entre 5,0 et 100 g/10 min.

5. Composition de polymères de propylène selon la revendication 1, dans laquelle la teneur totale en éthylène en tant qu'unité monomérique dans les composants polymériques (A) et (B) est comprise entre 1,0 et 25 % en masse par rapport à la masse de la totalité des unités monomériques constituant les composants polymériques (A) et (B).

6. Composition de polymères de propylène selon la revendication 1, dans laquelle ledit composant polymérique (C) a une viscosité Mooney comprise entre 10 et 100.

7. Composition de polymères de propylène selon la revendication 1, dans laquelle ladite température maximale de fusion dudit composant polymérique (C) est comprise entre 80 et 125°C.

8. Composition de polymères de propylène selon la revendication 1, dans laquelle ladite cristallinité dudit composant polymérique (C) est comprise entre 2 et 30 %.

9. Composition de polymères de propylène selon la revendication 1, dans laquelle ledit composant polymérique (C) a un rapport masse moléculaire moyenne en masse/masse moléculaire moyenne en nombre compris entre 4 et 8.